Europäisches Patentamt

European Patent Office

Office européen des brevets

(19)

(11) Numéro de publication: **0 275 773 B1**

(12) **FASCICULE DE BREVET EUROPEEN**

(45) Date de publication de fascicule du brevet: **24.07.91**

(51) Int. Cl.⁵: **G21C 17/10, H02B 1/20**

(21) Numéro de dépôt: **87402934.1**

(22) Date de dépôt: **21.12.87**

(54) **Installation de câblage de dispositifs électriques associés à un réacteur nucléaire.**

(30) Priorité: **24.12.86 FR 8618165**

(43) Date de publication de la demande:
**27.07.88 Bulletin 88/30**

(45) Mention de la délivrance du brevet:
**24.07.91 Bulletin 91/30**

(84) Etats contractants désignés:
**BE CH DE ES GB IT LI NL SE**

(56) Documents cités:
**DE-A- 1 462 213**
**FR-A- 2 098 239**
**GB-A- 2 161 315**

(73) Titulaire: **FRAMATOME**
**Tour Fiat 1, Place de la Coupole**
**F-92400 Courbevoie(FR)**

(72) Inventeur: **Dejeux, Pol**
**53 Avenue de la Source**
**F-94130 Nogent sur Marne(FR)**
Inventeur: **Desfontaines, Guy**
**18 Rue Jean Jaurès**
**F-92800 Puteaux(FR)**

(74) Mandataire: **Fort, Jacques et al**
**CABINET PLASSERAUD 84, rue d'Amsterdam**
**F-75009 Paris(FR)**

**Description**

La présente invention concerne les installations de câblage de dispositifs électriques associés à un réacteur nucléaire muni d'un couvercle mobile, dispositifs tels que capteurs de mesure de la position de grappe de contrôle du coeur, actionneurs de mécanisme de commande de ces grappes, thermocouples, etc.. Elle trouve une application particulièrement importante, bien que non exclusive, dans le domaine des réacteurs refroidis et modérés à l'eau légère où le grand nombre de grappes de contrôle entraîne des problèmes lors des changements de câbles en cas de défaillance de ceux-ci ou des opérations de connexion/déconnexion sur les mécanismes.

On connaît déjà les installations de câblage de dispositifs électriques associés à un réacteur nucléaire. Le document FR-A-2 567 305, montre une installation du type comportant, associé à chacun des dispositifs électriques, au moins un premier câble issu d'un côté du dispositif et comportant de l'autre côté un connecteur de branchement, installé au-dessus du couvercle de réacteur et un deuxième câble, correspondant à chacun des premiers câbles, muni d'un connecteur mobile à chacune de ses extrémités et susceptible d'être raccordé, d'une part au connecteur de branchement du dispositif installé au-dessus du couvercle, et d'autre part à un connecteur fixé sur une plaque installée à l'écart du réacteur. Ce deuxième câble est constitué à l'écart du réacteur. Ce deuxième câble est constitué d'un premier tronçon, à l'intérieur d'une gaine étanche installée horizontalement au-dessus du couvercle et d'un deuxième tronçon destiné à être raccordé au connecteur fixé sur la plaque installée à l'écart du réacteur.

Cette installation de câblage permet de résoudre de nombreux problèmes. Toutefois, lors de l'ouverture du couvercle du réacteur, il est nécessaire de procéder à de nombreuses déconnexions des câbles et de leurs tronçons afin de pouvoir accéder à l'intérieur de la cuve. A l'inverse, lors de la fermeture du couvercle, il faut reconnecter tous ces câbles un par un avec les risques d'erreur que cela comporte.

A titre d'exemple, pour un réacteur nucléaire à eau sous pression connu, comportant quatre boucles de refroidissement, le nombre de grappes de contrôle et d'arrêt est de soixante-treize et le nombre de thermocouples de cinquante deux. Pour chaque grappe de contrôle il existe un câble pour l'alimentation en puissance des mécanismes de commande de la grappe et un câble pour le capteur de mesure de la position de la grappe. On compte également un câble de mesure par thermocouple, ce qui fait un total de cent quatre-vingt-dix-huit câbles.

L'installation de ces câbles est une opération longue, délicate, effectuée dans des conditions d'accès difficiles. De plus, le raccordement des différents connecteurs au cours des opérations d'ouverture/fermeture du couvercle du réacteur est effectué dans un milieu rendu hostile par la radioactivité émanant du coeur.

Les câbles doivent, dans certains cas, respecter de forts rayons de courbure et la faible place disponible au-dessus du couvercle ne permet pas la présence de surlongueurs superflues. Celles-ci doivent donc être coupées sur place, dans les conditions difficiles ci-dessus évoquées.

La présente invention vise à fournir une installation de câblage répondant mieux que celles antérieurement connues, aux exigences de la pratique, notamment en ce qu'elle permet:

- une réduction des temps d'intervention, d'où une amélioration de la disponibilité des tranches de réacteur nucléaire, et une minimisation des irradiations du personnel exploitant,
- une moindre détérioration des connexions des câbles de l'installation de câblage,
- une réduction des risques d'erreurs lors des reconnexions des câbles après intervention sur le couvercle du réacteur ou en cas de changement suite à une détérioration.

Dans ce but, l'invention propose notamment une installation de câblage de contrôle et de puissance de dispositifs électriques associés à un réacteur nucléaire muni d'un couvercle mobile, comportant :

- plusieurs premiers câbles issus chacun d'un dispositif et se terminant chacun par un connecteur de raccordement installé au-dessus du couvercle du réacteur, à distance du dispositif,
- plusieurs seconds câbles destinés chacun à être reliés à un premier câble respectif et ayant chacun :
- un premier tronçon ayant, à une extrémité proximale, un premier connecteur mobile susceptible d'être connecté au connecteur de raccordement du premier câble correspondant et, à une extrémité distale, un second connecteur mobile,
- un second tronçon ayant, à une extrémité proximale, un troisième connecteur mobile de raccordement au second connecteur mobile d'un premier tronçon correspondant et étant, à une extrémité distale, relié à un premier connecteur multiple ayant plusieurs contacts électriques reliés à des seconds tronçons respectifs, chaque premier connecteur multiple étant commun à au moins dix deuxièmes tronçons indépendants, et
- un troisième tronçon relié, à une extrémité proximale, à un second connecteur multiple destiné à se raccorder à un premier connecteur multiple correspondant, chaque second connecteur multiple étant commun à au moins dix troisièmes tronçons indépendants correspondant à des seconds tronçons indépendants respectifs, et ayant, à son extrémité distale, un dernier connecteur particulier à un seul câble et destiné à se raccorder à un connecteur fixe correspondant fixé sur une plaque installée à l'écart du réacteur, et

- plusieurs supports mobiles destinés chacun à recevoir tous les troisièmes tronçons qui sont associés à un nombre entier de deuxièmes connecteurs multiples lesdits supports mobiles étant déplaçables entre une position où les seconds connecteurs multiples correspondants sont couplés aux premiers connecteurs multiples associés et une position où le support mobile libère le dessus du couvercle et l'accès au-dessus du réacteur.

- Les connecteurs multiples, pouvant être connectés et déconnectés de façon rapide, permettent de réduire considérablement les temps d'intervention. Les risques d'erreur lors des reconnexions sont par ailleurs supprimés.

L'invention propose également une installation de câblage, caractérisée en ce que les moyens de maintient des seconds câbles comprennent :

- des moyens de support des premiers tronçons constitués par des jeux de barreaux rigides disposés au-dessus du couvercle du réacteur par nappes horizontales,
- une structure métallique modulaire de support des barreaux support chaque nappe de barreaux parallèles et assurant le cheminement des deuxièmes tronçons des seconds câbles jusqu'au premier connecteur multiple correspondant.

On peut par ailleurs, avoir recours à l'une des dispositions suivantes

- les barreaux rigides de support des premiers tronçons des deuxièmes câbles sont chacun formés d'une gaine métallique fermée contenant les premiers tronçons associés respectivement à chaque barreau, noyées dans un produit isolant tenant à l'irradiation.
- les connecteurs multiples sont connectables et déconnectables automatiquement,
- les entrées (ou sorties) des premiers tronçons de deuxième câble appartenant aux barreaux concernés aptes à être respectivement raccordés au connecteur de raccordement du premier câble correspondant installé au-dessus du couvercle du réacteur, sont placées régulièrement sur les parties latérales du barreau selon l'emplacement des connecteurs de raccordement situés au-dessus du couvercle auquel les entrées ou sorties se raccordent,

Dans ce cas, on peut notamment fixer le premier connecteur de deuxième câble venant du réacteur dans le barreau de support du premier tronçon de ce câble.

- au moins certains des seconds câbles ont respectivement le deuxième connecteur d'extrémité de premier tronçon situé à l'entrée dans le barreau de support du premier tronçon de chacun des seconds câbles.

L'invention sera mieux comprise à la lecture de la description qui suit d'un mode particulier de réalisation donné à titre d'exemple non limitatif. La description se réfère aux dessins qui l'accompagnent dans lesquels :

- la Figure 1a est une vue schématique de côté d'un réacteur nucléaire dans son enceinte en béton muni d'une installation de câblage selon l'invention.
- la Figure 1b est une vue de dessus du réacteur de la Figure 1a.
- la Figure 2 est une vue schématique en perspective montrant le dispositif selon l'invention dans son environnement.
- la Figure 3 montre en vue de dessus un détail de l'installation de câblage selon l'invention au niveau d'un connecteur multiple.
- la Figure 4 est une vue en élévation du support d'un tel connecteur.
- la Figure 5 est une vue de dessus partielle du mécanisme de manutention des grappes de contrôle d'un réacteur nucléaire à eau sous pression où l'on voit les descentes de câble puissance et contrôle sur les dispositifs.
- la Figure 6 donne un exemple de réalisation schématique d'un connecteur multiple,
- la Figure 7 donne une vue de face d'un autre mode de réalisation possible, sous forme schématique, d'un connecteur multiple selon l'invention.

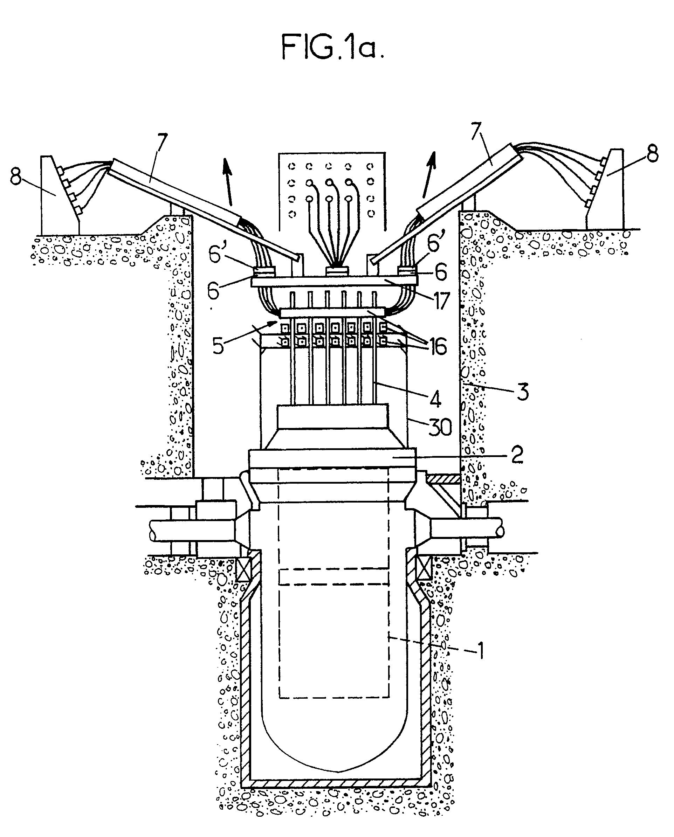

La Figure 1a montre une cuve de réacteur 1 munie d'un couvercle 2 et placée dans son enceinte en béton 3. Des dispositifs électriques tels que mécanisme de commande des grappes de contrôle, thermocouples ou capteurs de mesure de la position des grappes dans le coeur sont prévus. Il n'a pas été procédé à la représentation de ces éléments qui sont connus. Ces dispositifs sont alimentés en puissance par des câbles guidés à l'intérieur de tubes 4. Des tubes de ce genre servent également au guidage des câbles permettant le transfert des informations de contrôle commande du fonctionnement de ces dispositifs, et des informations provenant des capteurs de position et de température.

Ces câbles sont ensuite répartis transversalement et soutenus par des moyens 5 disposés horizontalement au-dessus du couvercle du réacteur. Les câbles sont ensuite raccordés à un connecteur multiple 6 concernant au moins une dizaine de câbles différents, mais avantageusement, plusieurs dizaines de ces câbles. Ce connecteur multiple 6 est lui-même connecté à un deuxième connecteur multiple 6' sur lequel sont rattachés les câbles correspondants, qui cheminent ensuite supportés par un chemin de câble 7 et sont respectivement raccordés par l'intermédiaire de connecteurs à des plaques fixes 8 installées à l'écart du réacteur.

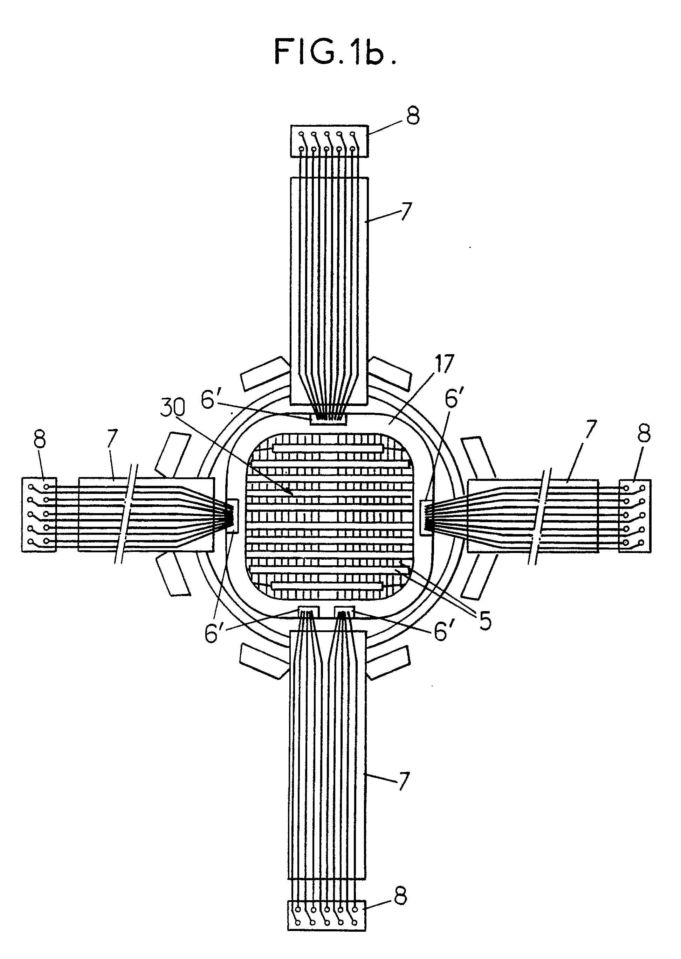

La Figure 1b est une vue de dessus de la Figure 1a.

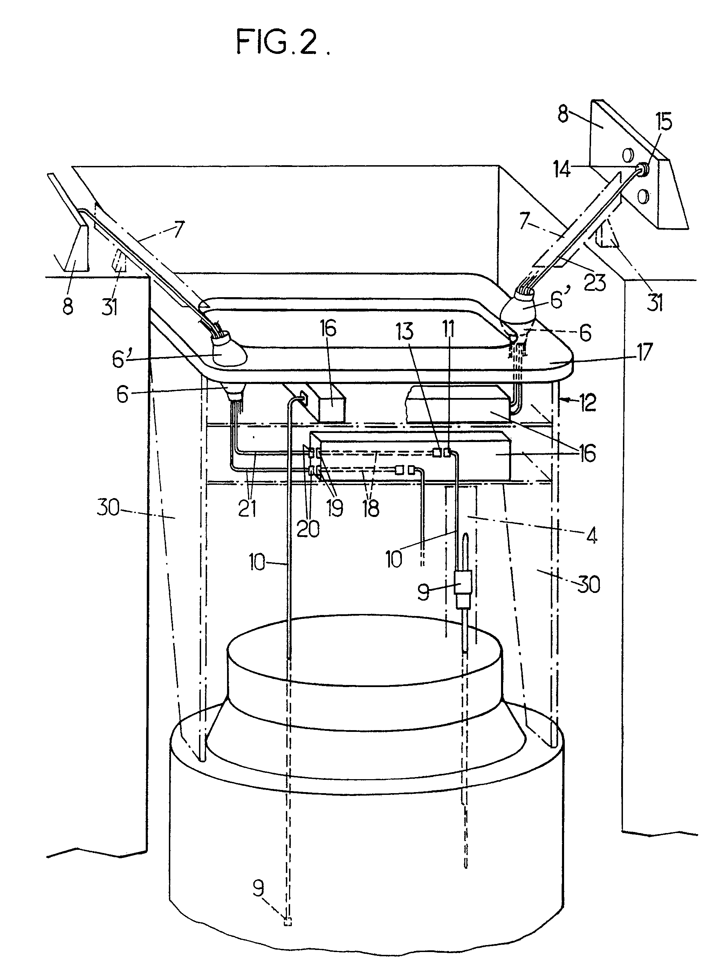

La Figure 2 montre plus précisément une installation de câblage de dispositif électrique selon l'invention.

Le dispositif 9 placé ou non à l'intérieur de la cuve du réacteur 1 comporte un premier câble 10 raccordé au dispositif 9 et dont l'extrémité opposée au dispositif est raccordée à un connecteur de raccordement 11, installé au-dessus du couvercle 2 du réacteur. Un second câble 12 est muni d'un premier connecteur mobile 13 à l'une de ses extrémités susceptible d'être connecté au connecteur de raccordement 11 et est muni d'un dernier connecteur mobile 14 à l'autre de ses extrémités susceptible d'être connecté à un connecteur fixe 15, fixé sur la plaque 8 installée à l'écart du réacteur.

Des moyens de support 4, 16, 7, 17, représentés de façon schématique sur les Figures 1a et 2 sont prévus pour maintenir structurellement les seconds câbles 12.

Ces seconds câbles 12 sont constitués d'un premier tronçon 18 muni d'une part du premier connecteur mobile 13 à une de ses extrémités et d'autre part d'un deuxième connecteur mobile 19 susceptible d'être connecté à un connecteur d'extrémité 20 d'un deuxième tronçon 21. Ce deuxième tronçon 21 comprend d'un côté ledit connecteur d'extrémité 20 et de l'autre côté un connecteur multiple 6 sur lequel viennent également se raccorder au moins dix autres deuxièmes tronçons de second câble, mais plus généralement plusieurs dizaines de deuxième tronçons de second câble.

Un troisième tronçon 23 comprenant un deuxième connecteur multiple 6' sur lequel viennent également se raccorder d'autres troisièmes tronçons de second câble, est apte à être connecté et déconnecté de façon rapide du premier connecteur multiple 6. Le troisième tronçon est terminé de l'autre côté par le dernier connecteur mobile 14 apte à être connecté sur la plaque 8 située à l'écart du réacteur. Ces connecteurs multiples 6' sont disposés en périphérie des nappes de câbles horizontalement disposées au-dessus du réacteur. Des moyens de support des seconds câbles comprennent :

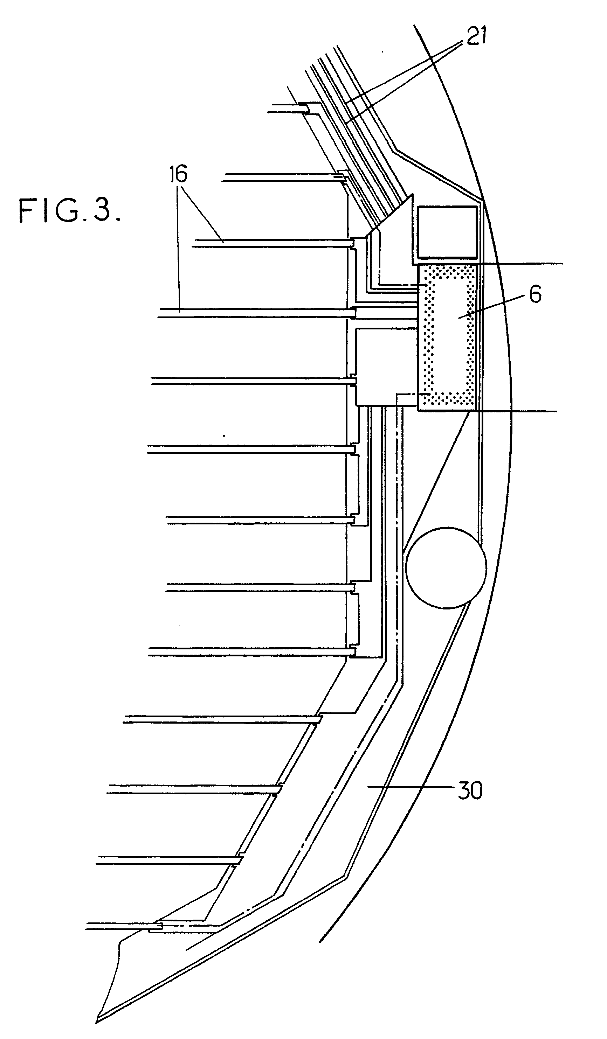

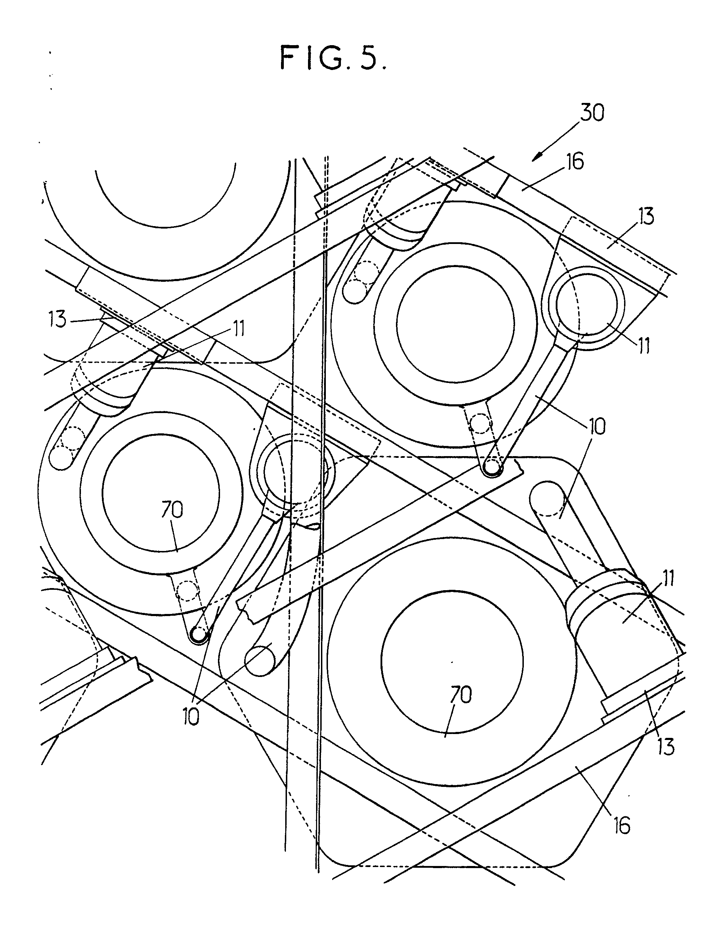

- des moyens de support des premiers tronçons comprenant des jeux de barreaux rigides 16 disposés au-dessus du couvercle du réacteur par nappes parallèles (voir fig. 1a, 1b, et 2).
- Des moyens de support des barreaux rigides comprenant une structure métallique modulaire 30 comme apparaissant schématiquement sur la Figure 1b et sur la Figure 2 en traits mixtes, ou sur les Figures 3 et 5, maintiennent chaque nappe de barreaux parallèle et assurent au moins partiellement de cheminement des deuxièmes tronçons 21 des seconds câbles 12 jusqu'au connecteur multiple 6 correspondant.

Les barreaux d'une même nappe sont indentiques et peuvent assurer la même fonction. La longueur de ceux-ci varie en fonction de leur position géographique au-dessus du couvercle et du nombre d'appareils électriques à désservir. Par même fonction, il faut entendre fonction puissance, ou fonction contrôle de témperature, etc... Ces barreaux peuvent être facilement préfabriqués et disposés sur les charpentes supports 30, ce qui permet une installation plus simple et d'un démontage plus aisé. Les moyens de support des seconds câbles comprennent également des moyens de support 7 des troisièmes tronçons 23 qui sont aptes à pivoter autour d'au moins un point d'appui 31. Ces supports 7, regroupent uniquement les troisièmes tronçons associés à un nombre entier de deuxièmes conducteurs multiples, avantageusement disposés dans le même emplacement géographique autour du réacteur. Les barreaux rigides 16 de support des premiers tronçons 18 de deuxième câble 12 sont constitués par une gaine métallique fermée content les portions noyées dans un produit isolant tenant à l'irradiation.

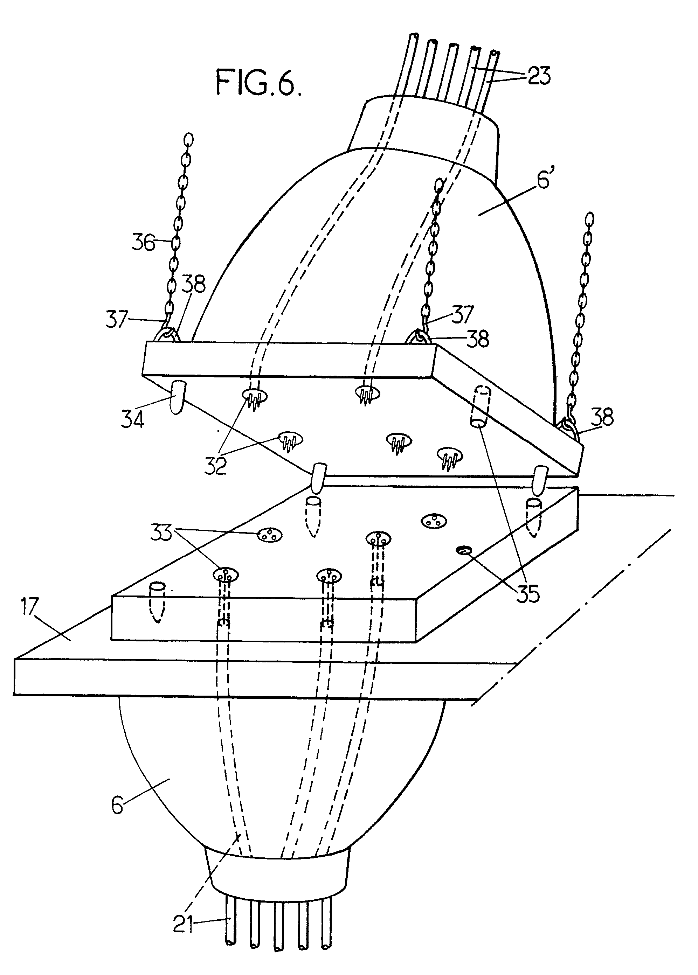

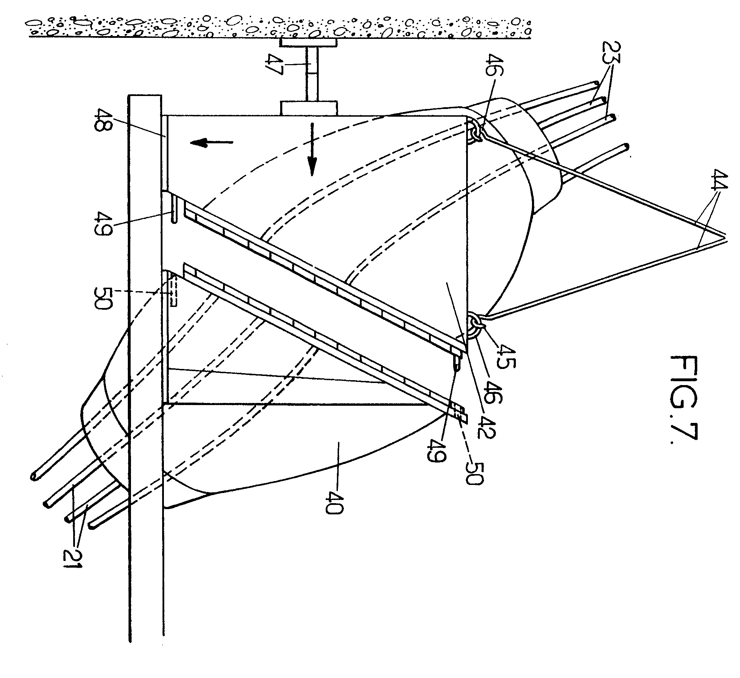

Les connecteurs multiples 6, 6' peuvent être connectables et déconnectables manuellement comme schématiquement montré sur la figure 6, ou automatiquement comme sur la figure 7.

La figure 6 montre un connecteur multiple sur lequel des broches mâles 32 correspondant chacune à un troisième tronçon 23 de second câble 12 viennent s'enficher dans des broches femelles 33 correspondant chacune à un deuxième tronçon de second câble 21 et des détrompeurs 34 permettent la remise en place du connecteur multiple sur son connecteur multiple correspondant sans erreur. Un dispositif de serrage et de maintien, des connecteurs multiples 6 sur les connecteurs multiples 6', schématiquement représenté en 35, assure une bonne tenue de l'ensemble aux éventuelles sollicitations extérieures.

Sur la figure 6 la manutention des connecteurs

multiples 6' se fait par l'intermédiaire d'élingues 36 fixées sur les connecteurs 6' par des crochets 37 crochetés dans des anneaux 38 appartenant au connecteur 6'.

Sur la figure 7 il a été représenté schématiquement deux connecteurs multiples connectables et déconnectables automatiquement. Le connecteur multiple 40 rattaché au deuxième tronçon de deuxième câble 21 est fixé sur le support 17. Le connecteur multiple 42 rattaché au troisième tronçon 23 de second câble est mis en place par l'intermédiaire d'un pont roulant (ne figurant pas sur le dessin). Des élingues 44, munies de crochet 45 sont fixées sur des anneaux 46, solidaires de la broche multiple 42. Un dispositif adéquat 47 connu en soi, permettant un déplacement longitudinal de la broche 42 vers la broche 40 est alors mis en place. Des moyens de guidage 48 constitués par exemple par des glissières permettent d'approcher grâce au dispositif adéquat 47 la broche 42 de la broche 40 et de les enficher l'une dans l'autre.

Des moyens détrompeurs et de centrage 49, 50 permettent une mise en place, sans erreur ni risque, des connecteurs multiples.

Selon un mode de réalisation préféré de l'invention, illustré sur la figure 2, les entrées ou les sorties des premiers tronçons 18 de deuxième câble 12 aptes à être respectivement raccordés au connecteur de raccordement 11 du premier câble 10 et installé au-dessus du couvercle 2 du réacteur, sont placées régulièrement sur les parties latérales du barreau 16 correspondant, et ce selon l'emplacement des connecteurs fixes situés au-dessus du couvercle auquel les entrées ou sorties se raccordent.

De même, les seconds câbles auront avantageusement leur connecteur d'extrémité 19 de deuxième tronçon situé à l'entrée dans le barreau de support 16 du premier tronçon de chacun des seconds câbles.

Ces barreaux 16 peuvent être facilement préfabriqués et disposés sur les charpentes de support 30 ce qui permet une installation simple nappe par nappe. Les points de distribution placés régulièrement le long du barreau selon le pas des composants à alimenter, peuvent soit être une sortie de câble, soit un connecteur multi-broches.

La Figure 3 montre, en vue de dessus, au niveau d'un connecteur multiple 6, l'arrivée des câbles 21 en provenance des barreaux 16.

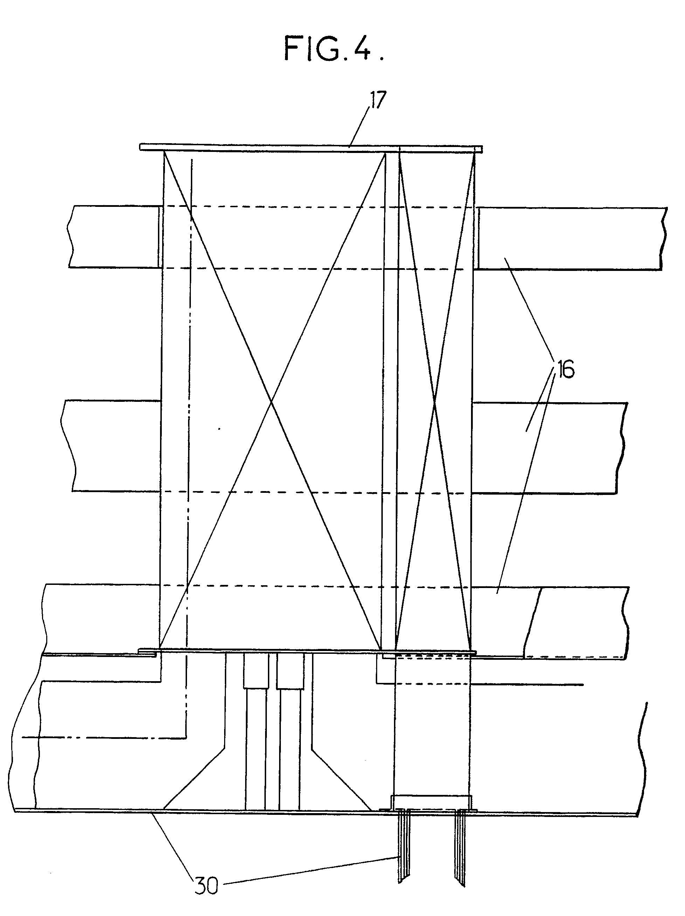

La figure 4 montre une vue de détail en élévation de trois nappes superposées de barreaux 16 dans lesquels cheminent les câbles d'une installation selon l'invention. Un support 17 va permettre d'y fixer un connecteur multiple selon l'invention.

La Figure 5 montre en vue de dessus et de façon plus détaillée une installation selon l'invention. La structure métallique modulaire 30 y apparaît ainsi que les parties hautes, externes à la cuve du réacteur des grappes de contrôle 70. Des connecteurs 11 de raccordement de premier câble 10 sont connectés sur les barreaux 16 par l'intermédiaire de connecteurs mobiles 13 des premières portions de second câble 18 (non visibles).

Il est décrit ci-après sommairement les opérations suivies lors du démontage d'une installation de câblage du dispositif électrique réalisé selon l'invention.

On déconnecte simultanément les câbles associés préalablement à un même connecteur multiple, d'une part au niveau des connecteurs multiples, et d'autre part au niveau de la plaque fixe intermédiaire située à l'écart du réacteur. Ensuite, on relève en les faisant pivoter les supports 7 des troisièmes tronçons de second câble, de façon à libérer l'accès au-dessus du réacteur. Il est alors procédé à l'enlèvement du reste de l'installation, simultanément au démontage du couvercle.

**Revendications**

1. Installation de câblage de contrôle et de puissance de dispositifs électriques (9) associés à un réacteur nucléaire muni d'un couvercle mobile, comportant :

   - plusieurs premiers câbles (10) issus chacun d'un dispositif (9) et se terminant chacun par un connecteur de raccordement (11) installé au-dessus du couvercle (2) du réacteur, à distance du dispositif,
   - plusieurs seconds câbles (12) destinés chacun à être reliés à un premier câble (10) respectif et ayant chacun :
   - un premier tronçon (18) ayant, à une extrémité proximale, un premier connecteur mobile (13) susceptible d'être connecté au connecteur de raccordement (11) du premier câble correspondant (10) et, à une extrémité distale, un second connecteur mobile (19),
   - un second tronçon (21) ayant, à une extrémité proximale, un troisième connecteur mobile (20) de raccordement au second connecteur mobile (19) d'un premier tronçon correspondant et étant, à une extrémité distale, relié à un premier connecteur multiple (6) ayant plusieurs contacts électriques reliés à des seconds tronçons respectifs (21), chaque premier connecteur multiple (6) étant commun à au moins dix deuxièmes tronçons (21) indépendants, et
   - un troisième tronçon (23) relié, à une extrémité proximale, à un second connecteur multiple (6') destiné à se raccorder à un premier connecteur multiple correspondant (6), chaque second connecteur multiple étant commun à au moins dix troisièmes tronçons indépendants correspondant à des seconds tronçons indépendants respectifs, et ayant, à son extrémité distale, un dernier connecteur (14) particulier à un seul câble et destiné à se raccorder à un connecteur fixe (15) correspondant fixé sur une plaque (8) installée à l'écart du réacteur, et

- plusieurs supports mobiles (7) destinés chacun à recevoir tous les troisièmes tronçons (23) qui sont associés à un nombre entier de deuxièmes connecteurs multiples (6'), lesdits supports mobiles étant déplaçables entre une position où les seconds connecteurs multiples (6') correspondants sont couplés aux premiers connecteurs multiples associés (6) et une position où le support mobile libère le dessus du couvercle et l'accès au-dessus du réacteur.

2. Installation selon la revendication 1, caractérisée en ce que les moyens de maintien des seconds câbles (12) comprennent également :

- des moyens (5) de support des premiers tronçons comprenant des jeux de barreaux (16) rigides disposés au-dessus du couvercle du réacteur par nappes horizontales, et
- une structure métallique modulaire (30) de support des barreaux supportant chaque nappe de barreaux parallèles et assurant le cheminement des deuxièmes tronçons (21) des seconds câbles (12) jusqu' au premier connecteur multiple (6) correspondant.

3. Installation selon la revendication 2, caractérisée en ce que les barreaux rigides (16) de support des premiers tronçons (18) des deuxièmes câbles (12) sont chacun formés d'une gaine métallique fermée contenant lesdits tronçons associés respectivement à chaque barreau, noyées dans un produit isolant tenant à l'irradiation.

4. Installation de câblage selon l'une quelconque des revendications 2 à 3, caractérisée en ce que pour chaque barreau (16) les entrées ou les sorties des premiers tronçons (18) des deuxièmes câbles (12) appartenant aux barreaux concernés, aptes à être respectivement raccordés aux connecteurs de raccordement (11) du premier câble correspondant installé au-dessus du couvercle du réacteur, sont placées régulièrement sur les parties latérales dudit barreau (16) selon l'emplacement desdits connecteurs de raccordement (11) situés au-dessus du couvercle auquel lesdites entrées ou sorties se raccordent.

5. Installation de câblage selon l'une quelconque des revendications 2 à 4, caractérisée en ce que la connexion (11, 13) s'effectue au passage du câble venant du réacteur dans le barreau (16) de support de la première portion du premier tronçon (18) dudit câble.

6. Installation de câblage selon l'une quelconque des revendications 2 à 5, caractérisée en ce qu'au moins certains des seconds câbles (12) ont respectivement leur connecteur d'extrémité (20) des deuxièmes tronçons (21) situés à l'entrée des seconds câbles dans le barreau (16) de support du premier tronçon (18) de chacun des seconds câbles (12).

7. Installation selon l'une quelconque des revendications précédentes caractérisée en ce que les connecteurs multiples (6, 6') sont connectables et déconnectables automatiquement.

**Claims**

1. A control and power wiring installation for electrical devices (9) associated with a nuclear reactor having a movable lid, comprising:

- a plurality of first cables (10) each originating from a device (9) and each ending with a junction connector (11) located above the reactor lid (2), remotely from the device,
- a plurality of second cables (12) each for connection with a respective first cable (10) and each having:
- a first section (18) having, at a proximal end thereof, a first movable connector (13) suitable for connection to the junction connector (11) of the respective first cable (10) and, at a distal end thereof, a second movable connector (19),
- a second section (21) having, at a proximal end thereof, a third movable connector (20) for junction with the second movable connector (19) of a corresponding first section and being, at a distal end thereof, connected to a first multiple connector (6) having a plurality of electrical contacts connected to respective second sections (21), each first multiple connector (6) being common to at least ten independent second sections (21), and

- a third section (23) connected, at a proximal end thereof, to a second multiple connector (6') arranged for junction with a corresponding first multiple connector (6), each second multiple connector being common to at least ten independent third sections corresponding to respective independent second sections and having, at the distal end thereof, a last connector (14) specific to only one cable and arranged for junction with a corresponding stationary connector (15) fixed on a plate (8) remote from the reactor vessel, and

- a plurality of movable supports (7) each for receiving all third sections (23) associated to a plurality of second multiple connectors (6'), said movable supports being movable between a position where the corresponding second multiple connectors (6') are connected to the associated first multiple connectors (6) and a position where the movable support clears the space above the lid and access above the reactor.

2. Installation according to claim 1, characterized in that the means for maintaining the second cables (12) further comprise :

- means (5) for supporting the first sections, comprising sets of rigid bars (16) located above the lid of the reactor and distributed in horizontal layers, and

- a modular metal structure (30) for supporting the bars, carrying each layer of parallel bars and providing a path for the second sections (21) of the second cables (12) up to the corresponding first multiple connector (6).

3. Installation according to claim 2, characterized in that the rigid bars (16) for supporting the first sections (18) of the second cables (12) are each formed as a closed metal duct containing said sections respectively associated with each bar, embedded in a radiation-resistant insulating product.

4. Wiring installation according to any one of claims 2 to 3, characterized in that, for each bar (16), the inputs or outputs of the first sections (18) of the second cables (12) belonging to the respective bars, suitable for being respectively joined to the junction connector (11) of the corresponding first cable located above the lid of the reactor, are regularly located on the lateral portions of said bar (16) according to the location of said junction connectors (11) located above the lid, to which said inputs or outputs are connected.

5. Wiring installation according to any one of claims 2 to 4, characterized in that the junction (11, 13) is at the penetration of the cable originating from the reactor in the bar (16) which supports the first portion of the first section (18) of said cable.

6. Wiring installation according to any one of claims 2 to 5, characterized in that at least certain ones of the second cables (12) respectively have their end connector (20) of the second sections (21) located at the input of the second cables in the bar (16) which supports the first section (18) of each of the second cables (12).

7. Installation according to any one of the preceding claims, characterized in that the multiple connectors (6, 6') are automatically connectable and disconnectable.

**Patentansprüche**

1. Verkabelungseinrichtung von Steuer- und Leistungskabeln von elektrischen Vorrichtungen (9), die einem Kernreaktor zugeordnet sind, der mit einem bewegbaren Deckel versehen ist, mit :

mehreren ersten Kabeln (10), die jeweils von einer Vorrichtung (9) ausgehen und jeweils in einem Verbindungsstecker (11) enden, der oberhalb des Deckels (2) des Reaktors mit einem Abstand zur Vorrichtung angeordnet ist,

mehreren zweiten Kabeln (12), die jeweils dazu bestimmt sind, mit einem entsprechenden ersten Kabel (10) verbunden zu werden und jeweils aufweisen:

ein erstes Stück (18), das an einem proximalen Ende einen ersten bewegbaren Stecker (13) aufweist, der in der Lage ist, mit dem Verbindungsstecker (11) des entsprechenden ersten Kabels (10) verbunden zu werden, und an einem distalen Ende einen zweiten bewegbaren Stecker (19) aufweist,

ein zweites Stück (21), das an einem proximalen Ende einen dritten bewegbaren Verbindungsstecker (20) mit dem bewegbaren Stek-

ker (19) eines entsprechenden ersten Teils aufweist, und an einem distalen Ende mit einem ersten Mehrfachstecker (6) verbunden ist, der mehrere elektrische Kontakte aufweist, die mit entsprechenden zweiten Teilen (21) verbunden sind, wobei jeder erste Mehrfachstecker (6) für wenigstens zehn zweite unabhängige Teile (21) gemeinsam ist, und

einem dritten Stück (23), das an einem proximalen Ende mit einem zweiten Mehrfachstecker (6') verbunden ist, der dazu bestimmt ist, sich mit einem ersten entsprechenden Mehrfachstecker (6) zu verbinden, wobei jeder zweite Mehrfachstecker für wenigstens drei dritte unabhängige Stücke gemeinsam ist, entsprechend den zweiten unabhängigen entsprechenden Stücken und an seinem distalen Ende einen letzten Stecker (14) für ein einziges Kabel aufweist und dazu bestimmt ist, einem entsprechenden festen Stecker (15) zugeordnet zu sein, der auf einer Platte (8) befestigt ist, die im Abstand von dem Reaktor angeordnet ist, und

mehrere bewegbare Stützen (7), die jeweils dazu bestimmt sind, alle dritten Stücke (23) aufzunehmen, die einer ganzen Zahl von zweiten Mehrfachsteckern (6') zugeordnet sind, wobei die bewegbaren Stützen zwischen einer Stellung, wo die zweiten entsprechenden Mehrfachstecker (6') mit den zugehörigen ersten Mehrfachsteckern (6) gekoppelt sind, und einer Stellung bewegbar sind, wo die bewegbare Stütze das Obere des Deckels und den Zutritt oberhalb des Reaktors freimacht.

2. Einrichtung nach Anspruch 1, **dadurch gekennzeichnet**, daß die Einrichtungen zum Halten der zweiten Kabel (12) ebenfalls aufweisen:

Stützeinrichtungen (5) der ersten Stücke, die Sätze von steifen Stäben (16) aufweisen, die oberhalb des Reaktordeckels durch horizontale Bahnen angeordnet sind, und

eine modulartige Metallstruktur (30) zur Stützung der Stäbe, die jede Bahn bzw. Schicht von parallelen Stäben abstützen und den Verlauf der zweiten Stücke (21) der zweiten Kabel (12) bis zum ersten entsprechenden Mehrfachstecker sicherstellen.

3. Einrichtung nach Anspruch 2, **dadurch gekennzeichnet,** daß die steifen Stützstäbe (16) der ersten Stücke (18) der zweiten Kabel (12) jeweils mit einer geschlossenen metallischen Hülle ausgebildet sind, die die Stücke enthält, die entsprechend einem jeden Stab zugeordnet sind, die in ein isolierendes Material eingetaucht sind, das der Strahlenbelastung widersteht.

4. Verkabelungseinrichtung nach einem der Ansprüche 2 oder 3, **dadurch gekennzeichnet,** daß für jeden Stab (16) die Eingänge oder Ausgänge der ersten Stücke (18) der zweiten Kabel (12), die zu den betreffenden Stäben gehören, geeignet, entsprechend mit den Verbindungssteckern (11) des ersten entsprechenden Kabels verbunden zu werden, das oberhalb des Reaktordeckels angeordnet ist, regelmäßig auf den Seitenbereichen der Stäbe (16) gemäß der Anordnung der Verbindungsstecker (11) angeordnet sind, die oberhalb des Deckels angeordnet sind, dem die Eingänge oder Ausgänge zugeordnet sind.

5. Verkabelungseinrichtung nach einem der Ansprüche 2 bis 4, **dadurch gekennzeichnet,** daß die Verbindung (11,13) beim Hindurchtritt des Kabels, kommend von dem Reaktor, in den Stützstab (16) des ersten Bereichs des ersten Stücks (18) des Kabels erfolgt.

6. Verkabelungseinrichtung nach einem der Ansprüche 2 bis 5, **dadurch gekennzeichnet,** daß wenigstens gewisse der zweiten Kabel (12) ensprechend ihre Endenstecker (20) der zweiten Stücke (21) am Eingang der zweiten Kabel in den Stützstab (16) des ersten Stücks (18) eines jeden der zweiten Kabel (12) angeordnet haben.

7. Einrichtung nach einem der vorhergehenden Ansprüche, **dadurch gekennzeichnet,** daß die Mehrfachstecker (6,6') automatisch verbindbar und lösbar sind.

# FIG.1a.

# FIG.1b.

# FIG.2.

FIG.3.

# FIG. 4.

# FIG. 5.

# FIG.6.

FIG.7.